# EUROPÄISCHE PATENTSCHRIFT

(11) **EP 3 259 787 B1**
(45) Veröffentlichungstag und Bekanntmachung des Hinweises auf die Patenterteilung: **11.09.2019**
(21) Anmeldenummer: 16704642.4
(22) Anmeldetag: 16.02.2016
(51) Int. Cl.: H01M 2/02, H01M 2/34, H01M 10/04, H01M 10/42, H01M 2/10, H01M 2/20, B60L 3/00, B60L 3/12, B60L 58/21, B60L 50/64

(54) **VERFAHREN ZUM FERTIGEN EINER BATTERIE**
METHOD FOR MANUFACTURING A BATTERY
PROCÉDÉ DE FABRICATION D'UNE BATTERIE

(30) Priorität: 18.02.2015 DE 102015002147
(43) Veröffentlichungstag der Anmeldung: 27.12.2017
(73) Patentinhaber: Audi AG, 85045 Ingolstadt (DE)
(72) Erfinder: HINTERBERGER, Michael, 85055 Ingolstadt (DE); HELLENTHAL, Berthold, 90596 Schwanstetten (DE)
(74) Vertreter: Neuhausen, Marc-Alexander
(86) Internationale Anmeldenummer: PCT/EP2016/053229
(87) Internationale Veröffentlichungsnummer: WO 2016/131806

(56) Entgegenhaltungen:
- EP-A2- 2 442 384
- DE-A1-102011 117 474
- US-A1- 2012 242 144
- US-A1- 2012 243 130

## Beschreibung

Die Erfindung betrifft ein Verfahren zum Fertigen einer Batterie, bei welchem elektrische Anschlüsse einer Mehrzahl von Batteriezellen, welche jeweils ein einziges in einem Batteriezellengehäuse der jeweiligen Batteriezelle aufgenommenes galvanisches Element aufweisen, mittels zumindest eines elektrisch leitfähigen Verbindungselements verbunden werden. Das Verbinden erfolgt dabei derart, dass von der Batterie eine Nennspannung bereitgestellt wird, welche größer ist als die Nennspannung einer der Batteriezellen.

Aus dem Stand der Technik etwa der DE 10 2010 045 037 A1 ist es bekannt, eine Mehrzahl von Batteriezellen zum Bereitstellen einer bestimmten Spannung beziehungsweise eines bestimmten Stroms zu einer Batterie zusammenzuschalten. Solche Batterien werden heutzutage insbesondere als Traktionsbatterien in Kraftfahrzeugen wie etwa Elektrofahrzeugen oder Hybridfahrzeugen zum Bereitstellen von elektrischer Antriebsenergie eingesetzt.

Die DE 10 2011 117474 A1 beschreibt eine Energiespeicherzelle, bei welcher zwischen einem Stromableiter eines Elektrodenstapels der Energiespeicherzelle und einem Zellanschluss eine Schaltvorrichtung angeordnet ist. Über die Schaltvorrichtung kann der Stromableiter wahlweise mit dem Zellanschluss oder mit einer Verbindungsleitung verbunden werden, an welche ein Verbraucher in Form eines Widerstands angeschlossen ist.

Die US 2012/242144 A1 beschreibt eine Batterie mit einer Mehrzahl von Batteriezellen, welche eine jeweilige Zellausgleichsschaltung aufweisen. Die Zellausgleichsschaltung ist mechanisch an einem Batteriezellengehäuse der Batteriezelle befestigt. Jede Batteriezelle weist eine Stromunterbrechungseinrichtung auf, mittels welcher die Batteriezelle von den anderen Batteriezellen getrennt und mit der Zellausgleichsschaltung verbunden werden kann. Die Stromunterbrechungseinrichtung ist zwischen einem positiven Anschluss und einem negativen Anschluss der Batteriezelle angeordnet.

An den Anschlüssen oder Batteriepolen von aus dem Stand der Technik bekannten Batteriezellen liegt im Normalfall eine elektrische Spannung an. Durch das Aneinanderreihen einer Vielzahl von einzelnen Batteriezellen zu einem Gesamtsystem beziehungsweise einer Batterie in Reihenschaltung ergeben sich bei der Fertigung etwa von Traktionsbatterien Spannungen von mehr als 60 Volt. Batterien mit einer Spannung von mehr als 60 Volt werden auch als Hochvoltbatterien bezeichnet und erfordern entsprechende Schutzvorkehrungen.

Bei Traktionsbatterien für Elektrofahrzeuge oder Hybridfahrzeuge liegt die elektrische Spannung derzeit sogar bei etwa 200 Volt bis 900 Volt, und Energieinhalte von bis zu 100 Kilowattstunden und mehr können von derartigen Traktionsbatterien bereitgestellt werden. Insbesondere der Aufbau von Hochvoltbatterien, welche als Traktionsbatterien in Kraftfahrzeugen wie Elektrofahrzeugen oder Hybridfahrzeugen zum Einsatz kommen, erfordert daher äußerste Vorsicht.

Bereits bei Spannungen von mehr als 60 Volt müssen für etwa mit dem Fertigen der Batterie befasste Werker entsprechende Schutzvorkehrungen vorgesehen werden wie das Tragen einer Schutzkleidung, von Handschuhen, eines Helms mit Visier und das Vorsehen von Abdeckungen und dergleichen. Des Weiteren ist ein enormer Aufwand hinsichtlich der Qualifizierung und von Schulungen im Umgang mit Hochvoltbatterien notwendig. Derzeit wird also sehr viel Aufwand betrieben, damit beim Umgang mit Hochvoltbatterien, insbesondere bei der Fertigung einer solchen Batterie, keine elektrischen Gefährdungen für Personen entstehen.

Als nachteilig ist hierbei der Umstand anzusehen, dass höhere elektrische Spannungen, etwa Spannungen von > 60 Volt, im schlimmsten Fall lebensgefährlich sein können. Zudem kann bei Hochvoltbatterien schlagartig eine enorme Energiemenge freigesetzt werden. Lichtbögen und Kurzschlüsse können auftreten und Personen verletzen oder töten. Des Weiteren können sich im Umfeld der Batterie befindende Gegenstände geschädigt oder in Mitleidenschaft gezogen werden.

Hierbei ist zu beachten, dass elektrische Spannungen nicht mit den menschlichen Sinnen im Vorfeld erkannt, erfasst oder gefühlt werden können. Erst hinterher, beispielsweise nach einer Berührung eines spannungsführenden Bauteils einer Batterie, wird das Vorhandensein der elektrischen Spannung erkannt, aber dann kann es schon zu spät sein, um Schäden zu vermeiden.

Die Maßnahmen für den sicheren Aufbau und Umgang mit Hochvoltbatterien sind daher sehr aufwendig und kostenintensiv. Die Gefahr durch elektrische Schläge ergibt sich aber auch für nach der Fertigung der Batterie mit dieser befasste Personen, etwa für das Personal im Kundendienst, welcher mit der Wartung einer Batterie betraut ist. Dasselbe gilt für einen Nutzer eines Kraftfahrzeugs, welches mit der Batterie ausgestattet ist. Jedoch auch Rettungskräfte, welche nach einem Unfall eines Elektrofahrzeugs oder Hybridfahrzeugs mit der Batterie umgehen, sind bei Hochvoltbatterien entsprechenden Gefahren ausgesetzt.

Bei der Fertigung von Hochvoltbatterien werden üblicherweise Batteriezellen eingesetzt, welche bereits im Auslieferzustand der Batteriezelle aktiv sind. Die Batteriezellen sind nämlich in der Regel vom Hersteller bereits vorgeladen, auch wenn der Ladezustand vergleichsweise gering ist und bei etwa 10 Prozent bis 15 Prozent des maximalen Ladezustands liegen kann. Infolgedessen liegt auch schon während der Fertigung der Batterie eine elektrische Spannung an den beiden Anschlüssen oder Batteriepolen der jeweiligen Batteriezelle an. Beim Aufbau von Hochvoltbatterien wird also mit gewissermaßen "scharfen Batteriezellen" hantiert. Selbst bei dem geringen Ladezustand kann es somit aufgrund der Aneinanderreihung von elektrisch in Reihe geschalteten Batteriezellen zum Auftreten von lebensgefährlich hohen Spannungen kommen.

Aufgabe der vorliegenden Erfindung ist es daher, ein Verfahren, eine Batterie und ein Kraftfahrzeug der eingangs genannten Art zu schaffen, welches oder welche eine geringere Gefährdung mit sich bringt.

Diese Aufgabe wird durch ein Verfahren mit den Merkmalen des Patentanspruchs 1 gelöst. Vorteilhafte Ausgestaltungen mit zweckmäßigen Weiterbildungen der Erfindung sind in den abhängigen Patentansprüchen angegeben.

Bei dem erfindungsgemäßen Verfahren wird nach dem Verbinden der elektrischen Anschlüsse von wenigstens zwei Batteriezellen wenigstens ein Schaltelement einer der Batteriezellen in einen Schaltzustand überführt, in welchem eine elektrisch leitende Verbindung zwischen einem Ableiter des galvanischen Elements und zumindest einem der elektrischen Anschlüsse der Batteriezelle hergestellt ist. Das wenigstens eine Schaltelement ist hierbei innerhalb des Batteriezellengehäuses zwischen dem Ableiter und dem zumindest einen elektrischen Anschluss der Batteriezellen angeordnet. Der Ableiter des galvanischen Elements führt zu einem der elektrischen Anschlüsse der Batteriezelle.

Vor dem Überführen in den Schaltzustand, in welchem die elektrisch leitende Verbindung hergestellt ist, ist die elektrisch leitende Verbindung entsprechend unterbrochen. Infolgedessen liegt an den Anschlüssen der die wenigstens zwei Batteriezellen umfassenden Batterie dann noch keine Spannung an. So kann insbesondere das Auftreten von Spannungen über 60 Volt verhindert werden. Entsprechend kann gefahrlos mit den einzelnen Batteriezellen bei der Fertigung umgegangen werden. Erst wenn die einzelnen Batteriezellen elektrisch leitend miteinander verbunden sind, wird durch Schließen des wenigstens einen Schaltelements dafür gesorgt, dass die Batterie die Nennspannung bereitstellt.

Bei dieser Nennspannung handelt es sich bevorzugt um eine Spannung von mehr als 60 Volt und insbesondere um eine Spannung, wie sie für Traktionsbatterien von Kraftfahrzeugen vorgesehen ist, also insbesondere um Spannungen zwischen 200 Volt und 900 Volt.

Das galvanische Element der jeweiligen Batteriezelle ist bevorzugt als Sekundärelement ausgebildet, welches zum Versorgen einer elektrischen Komponente entladen und nach der Entladung wieder aufgeladen werden kann. Hierbei umfasst das galvanische Element in an sich bekannter Weise die Ableiter etwa in Form von Metallfolien, welche mit dem elektrochemisch aktiven Material der Elektroden des galvanischen Elements beschichtet sind. Des Weiteren ist ein Elektrolyt vorgesehen sowie ein die elektrochemisch aktiven Materialien voneinander trennender Separator. In einem solchen galvanischen Element können die Ableiter gestapelt, gefaltet oder gewickelt vorliegen, so dass das galvanische Element auch als Zellstapel oder Zellwickel bezeichnet wird.

Es besteht die Möglichkeit, das wenigstens eine Schaltelement in den Schaltzustand zu überführen, in welchem die elektrisch leitende Verbindung zwischen dem Ableiter und dem zumindest einen elektrischen Anschluss der Batteriezelle unterbrochen ist. Die Batterie kann also bei Bedarf deaktiviert oder gefahrlos geschaltet werden. Entsprechend ist die Gefährdung beim Aufbau der Batterie, insbesondere der Hochvoltbatterie, verringert und bevorzugt eliminiert. Als Hochvoltbatterie soll vorliegend eine Batterie verstanden werden, welche eine Nennspannung von mehr als 60 Volt aufweist.

Insbesondere ist dementsprechend durch das Verfahren ein gefahrloser Aufbau von Hochvoltbatterien ermöglicht. Des Weiteren kann beim Auftreten eines Problems mit der Batterie das wenigstens eine Schaltelement in den Schaltzustand überführt werden, in welchem die elektrisch leitende Verbindung unterbrochen ist. Dies ist sowohl während der Fertigung der Batterie von Vorteil, jedoch auch dann, wenn die Batterie beispielsweise in einem Kraftfahrzeug eingesetzt wird. Hier kann nämlich im Notfall, etwa nach einem Unfall des Kraftfahrzeugs, die Hochvoltbatterie deaktiviert werden.

Insbesondere beim Vorsehen des Halbleiterelements als Schaltelement ist es vorteilhaft, dass eine ebenso wie das Schaltelement innerhalb des Batteriezellengehäuses angeordnete Steuereinheit der Batteriezelle, welche das wenigstens eine Schaltelement aufweist, das Schaltelement ansteuert. Dann sorgt die Steuereinheit dafür, das Schaltelement in den Schaltzustand zu überführen, in welchem die elektrisch leitende Verbindung hergestellt ist. Das Vorsehen der in die Batteriezelle integrierten Steuereinheit macht das Schließen des Schaltelements und somit das Aktivieren der Batterie, also das Bereitstellen der gewünschten Spannung an den Klemmen oder Anschlüssen der Batterie, besonders einfach und aufwandsarm.

Durch das Vorsehen der Steuereinheit, mittels welcher durch Ansteuern des Schaltelements das Schaltelement in den geschlossenen Schaltzustand überführbar ist, ist eine intelligente Batteriezelle bereitgestellt, also eine sogenannte "SmartCell". Mittels der Steuereinheit lassen sich nämlich besonders einfach Kriterien vorgeben, bei deren Erfülltsein das wenigstens eine Schaltelement so geschaltet wird, dass die elektrisch leitende Verbindung hergestellt ist. Es lässt sich also mittels Intelligenz ein exaktes und eine Vielzahl von Parametern der jeweiligen Batteriezelle berücksichtigendes Schalten des Schaltelements vorgeben oder programmieren. Dies gilt insbesondere, wenn der Steuereinheit Messwerte von Sensoren zugeführt werden, welche die Batteriezelle betreffende Parameter wie eine Stromstärke eines durch die Batteriezelle fließenden Stroms und/oder eine Temperatur und/oder eine Spannung und/oder einen Druck und/oder eine mechanische Spannung und/oder eine Beschaffenheit eines Elektrolyten des galvanischen Elements und/oder eine Beschleunigung umfassen.

Besonders komfortabel ist es weiterhin, dass der Steuereinheit ein Befehl übermittelt wird, das Schaltelement anzusteuern. Dies kann insbesondere über eine leitungsgebundene und/oder drahtlose Kommunikationseinrichtung geschehen.

Der Befehl stammt von einer übergeordneten Steuerungseinrichtung der Batterie, etwa von einem Batteriemanagementsystem. So kann das Batteriemanagementsystem für das Schließen des wenigstens einen Schaltelements sorgen, etwa wenn von diesem festgestellt wurde, dass die mittels der Verbindungselemente elektrisch miteinander verbundenen Batteriezellen in Ordnung sind. So lässt sich die Batterie je nach Bedarf aktivieren oder gefahrlos schalten.

Bevorzugt werden die wenigstens zwei Batteriezellen durch das Schließen des wenigstens einen Schaltelements in Reihe geschaltet. Dann lässt sich nämlich eine entsprechend hohe Spannung mit der Batterie bereitstellen, und dennoch ist vor dem Schließen des Schaltelements keine Gefahr durch diese hohe Spannung gegeben.

Es ist möglich, das Schaltelement als Relais auszubilden. Dann lässt sich eine besonders sichere galvanische Trennung während der Fertigung der Batterie erreichen. Jedoch beansprucht ein solches mechanisch arbeitendes Bauteil vergleichsweise viel Bauraum innerhalb der Batteriezelle.

Bevorzugt ist daher das wenigstens eine Schaltelement als Halbleiterelement ausgebildet. Ein solches Halbleiterelement lässt sich besonders einfach und rasch in den gewünschten Schaltzustand überführen. Hierbei ist vorteilhaft der seitens einer Steuereinheit bestehende Energiebedarf äußerst gering, welche das Halbleiterelement mit einer Steuerspannung beaufschlagt. Des Weiteren kann eine Kombination eines Relais mit einem Halbleiterelement vorgesehen sein, um sowohl besonders rasch als auch besonders sicher die elektrisch leitende Verbindung unterbrechen beziehungsweise herstellen zu können.

Als weiter vorteilhaft hat es sich gezeigt, wenn die Steuereinheit es der übergeordneten Steuerungseinrichtung mitteilt, wenn das Schaltelement in den Schaltzustand überführt ist, in welchem die elektrisch leitende Verbindung hergestellt ist. Dann erfolgt nämlich eine Rückmeldung an die übergeordnete Steuerungseinrichtung, und das Verfahren ist besonders zuverlässig.

Die Steuereinheit kann der übergeordneten Steuerungseinrichtung zusätzlich oder alternativ mitteilen, welche Spannung die Batteriezelle bereitstellt, deren Schaltelement geschlossen wurde. Des Weiteren kann von der Steuereinheit eine Vielzahl weiterer die Batteriezelle betreffenden Informationen an die Steuerungseinrichtung übermittelt werden. So kann ein besonders effizienter und intelligenter Betrieb der Batterie sichergestellt werden.

Als weiter vorteilhaft hat es sich gezeigt, wenn eine Mehrzahl von Batteriezellen zu einem Batteriemodul zusammengefasst werden. Hierbei werden Modulanschlüsse wenigstens zweier Batteriemodule mittels eines elektrisch leitfähigen Modulverbinders verbunden. Anschließend wird dann wenigstens ein Schaltelement einer der Batteriezellen des jeweiligen Batteriemoduls in den Schaltzustand überführt, in welchem die elektrisch leitende Verbindung hergestellt ist. So können also Batteriemodule, welche nach dem Schließen der Schaltelemente eine gewisse Nennspannung bereitstellen, gefahrlos miteinander verbunden werden. Erst nach dem Verbinden der Batteriemodule kann dann durch das Schließen der Schaltelemente dafür gesorgt werden, dass sich die Nennspannungen der Batteriemodule addieren. So wird die gesamte Nennspannung der Batterie bereitgestellt. Durch einen solchen modularen Aufbau lässt sich die von den jeweiligen Modulen oder Einheiten ausgehende Gefährdung besonders gering halten. Dies ist dem gefahrlosen Fertigen der Batterie, insbesondere Hochvoltbatterie, förderlich.

Von Vorteil ist es weiterhin, wenn in der Batterie das Schaltelement zumindest der Batteriezelle geschlossen wird, durch welche Batteriezellenverbünde von jeweils in Reihe geschalteten Batteriezellen elektrisch leitend miteinander verbunden werden. Dann liegt nämlich an den Anschlüssen der jeweiligen Batteriezellenverbünde eine gewisse Spannung an, jedoch kann diese in einem weniger kritischen Bereich von beispielsweise weniger als 60 Volt gehalten werden.

Besonders bevorzugt ist es jedoch, wenn alle Batteriezellen der Batterie das Schaltelement aufweisen und nach dem Verbinden der elektrischen Anschlüsse aller Batteriezellen die Schaltelemente aller Batteriezellen gleichzeitig geschlossen werden. Dann ist eine maximale Sicherheit gewährleistet, da an den Anschlüssen keiner einzigen der Batteriezellen der Batterie eine Spannung anliegt, bevor das jeweilige Schaltelement geschlossen ist.

Eine Batterie für ein Kraftfahrzeug umfasst eine Mehrzahl von Batteriezellen. Die Batteriezellen weisen jeweils ein Batteriezellengehäuse auf, in welchem ein galvanisches Element aufgenommen ist. Die jeweilige Batteriezelle hat darüber hinaus zwei elektrische Anschlüsse, über welche die jeweilige Batteriezelle mit wenigstens einer weiteren Batteriezelle der Batterie mittels zumindest eines elektrisch leitfähigen Verbindungselements elektrisch verbunden ist. Von der Batterie ist eine Nennspannung bereitstellbar, welche größer ist als die Nennspannung einer der Batteriezellen. Hierbei ist zwischen einem Ableiter des galvanischen Elements und zumindest einem der elektrischen Anschlüsse wenigstens einer der Batteriezellen ein Schaltelement angeordnet, welches sich in einem Schaltzustand befindet, in welchem eine elektrisch leitende Verbindung zwischen dem Ableiter und dem zumindest einen elektrischen Anschluss der Batteriezelle unterbrochen ist. Dadurch, dass das Schaltelement geöffnet ist, stellt folglich die Batterie noch nicht die Nennspannung bereit, welche sie bei geschlossenem Schaltelement bereitzustellen in der Lage ist. Infolgedessen liegt auch an den Anschlüssen oder Klemmen der Batterie noch nicht die Nennspannung an, und eine von der Batterie ausgehende Gefährdung im Hinblick auf die Spannung ist besonders gering.

Ein Kraftfahrzeug umfasst zumindest eine solche Batterie. Das Kraftfahrzeug kann beispielsweise als Personenkraftwagen, insbesondere als ein Elektrofahrzeug oder Hybridfahrzeug ausgebildet sein. Des Weiteren kann es sich bei dem Kraftfahrzeug auch um ein elektrisch betriebenes Motorrad oder um ein elektrisch betriebenes Fahrrad handeln.

Es ist des Weiteren möglich, die Batterie in einem stationären Energiespeichersystem vorzusehen. Darüber hinaus kann es vorgesehen sein, dass die Batterie, welche in einem Kraftfahrzeug bereitgestellt war, als sogenannte Second Life Batterie weiterverwendet wird, bei welcher also die Batterie einer anders gearteten Nutzung zugeführt wird. Insbesondere bei Second Life Anwendungen können nämlich die Anforderungen etwa an die Leistungsfähigkeit der Batteriezellen geringer sein als bei Verwendung der Batteriezellen für die Batterie des Kraftfahrzeugs.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen als von der Erfindung umfasst und offenbart anzusehen, die in den Figuren nicht explizit gezeigt oder erläutert sind, jedoch durch separierte Merkmalskombinationen aus den erläuterten Ausführungen hervorgehen und erzeugbar sind.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen. Dabei zeigen:
- Fig. 1: eine schaltbare Batteriezelle, wie sie beim Fertigen einer in Fig. 3 gezeigten Batterie zum Einsatz kommt;
- Fig. 2: schematisch zwei Batteriezellen der in Fig. 3 gezeigten Batterie, wobei elektrische Anschlüsse der beiden Batteriezellen mittels einer Stromschiene elektrisch miteinander verbunden sind; und
- Fig. 3: schematisch die Batterie mit einer Vielzahl von in Reihe geschalteten schaltbaren Batteriezellen gemäß Fig. 1.

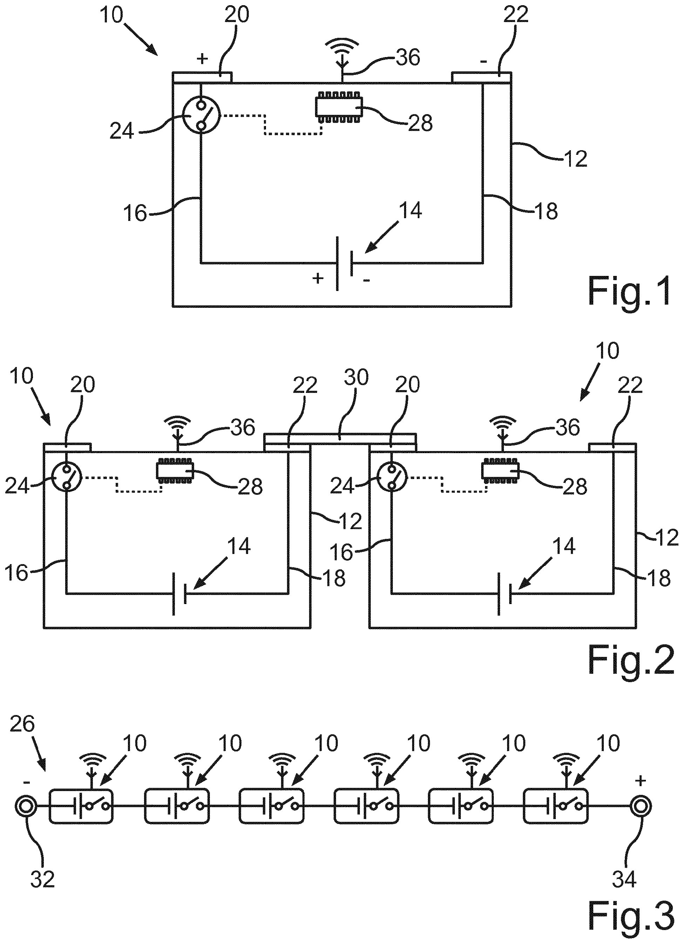

In Fig. 1 ist schematisch eine Batteriezelle 10 gezeigt, wie sie beispielsweise in einer ebenfalls schematisch in Fig. 3 gezeigten Batterie 26 eines Kraftfahrzeugs zum Einsatz kommen kann. Die Batteriezelle 10 kann hierfür etwa als Lithium-Ionen-Zelle ausgebildet sein. In der Batterie 26, wie sie etwa als Traktionsbatterie für ein Kraftfahrzeug zum Einsatz kommt, ist üblicherweise eine Vielzahl solcher Batteriezellen 10 elektrisch in Reihe und/oder parallel geschaltet, um entsprechend hohe Spannungen und Ströme bereitzustellen.

Bei einer Reihenschaltung solcher Batteriezellen 10 kann insgesamt eine sehr hohe Spannung und zwar eine Spannung von mehreren hundert Volt der Batterie 26 auftreten, etwa weil mehrere Batteriemodule, welche jeweils eine Mehrzahl von Batteriezellen 10 enthalten, elektrisch leitend miteinander verbunden sind. Diese hohen Spannungen aber auch das Auftreten von Kurzschlüssen oder Lichtbögen können eine Gefährdung für Personen mit sich bringen. Derartige Gefährdungen gilt es beispielsweise bei der Fertigung der Batterie 26 zu vermeiden oder zu reduzieren. Dies kann durch die Batteriezelle 10 erreicht werden.

Die Batteriezelle 10 umfasst ein Batteriezellengehäuse 12, welches vorliegend beispielhaft prismatisch ausgebildet ist. Innerhalb des Batteriezellengehäuses 12 ist ein galvanisches Element 14 angeordnet, welches mit einem jeweiligen elektrochemischen Material beschichtete Ableiter 16, 18 umfasst. Vorliegend sind von das elektrochemisch aktive Material und die Ableiter 16, 18 umfassenden Elektroden des galvanischen Elements 14 zur Vereinfachung lediglich der zu einem ersten elektrischen Anschluss 20 (etwa einem Pluspol) der Batteriezelle 10 führende Ableiter 16 gezeigt und der zu einem zweiten elektrischen Anschluss 22 der Batteriezelle 10 führende Ableiter 18, also der zum Minuspol führende Ableiter 18.

Bei der in Fig. 1 gezeigten Batteriezelle 10 ist es jedoch möglich, das galvanische Element 14 elektrisch von den Anschlüssen 20, 22 zu trennen. Hierfür ist ein Schaltelement 24 vorgesehen, mittels welchem sich eine elektrisch leitende Verbindung zwischen dem Ableiter 16 und dem Anschluss 20 unterbrechen lässt, indem das Schaltelement 24 geöffnet wird. Durch Schließen des Schaltelements 24 lässt sich die elektrisch leitende Verbindung zwischen dem Ableiter 16 und dem Anschluss 20 wieder herstellen.

In analoger Weise kann ein zweites (nicht gezeigtes) Schaltelement vorgesehen sein, mittels welchem sich die elektrisch leitende Verbindung zwischen dem Ableiter 18 und dem Anschluss 22 unterbrechen beziehungsweise herstellen lässt.

Das Schaltelement 24, welches beispielsweise als Halbleiterelement ausgebildet sein kann, wird vorliegend von einer Steuereinheit 28 geschaltet, welche ebenso wie das Schaltelement 24 innerhalb des Batteriezellengehäuses 12 angeordnet ist. Dadurch, dass sich die Batteriezelle 10 also mittels des Schaltelements 24 schalten lässt, kann dafür gesorgt werden, dass an den Anschlüssen 20, 22 erst dann eine Spannung anliegt, wenn dies gewünscht ist. Dies wird beispielsweise bei der Fertigung der Batterie 26 genutzt.

Die prinzipielle Vorgehensweise soll anhand der schematischen Darstellung in Fig. 2 verdeutlicht werden. Mittels eines elektrisch leitfähigen Verbindungselements etwa in Form einer Stromschiene 30 werden die Anschlüsse 22, 20 unterschiedlicher Polarität zweier Batteriezellen 10 miteinander verbunden. Bei Batteriezellen 10, bei welchen an den Anschlüssen 20, 22 eine Spannung anliegt, würde sich hier die Spannung der einzelnen Batteriezellen 10 addieren. Vorliegend sorgen jedoch die Schaltelemente 24 dafür, dass gefahrlos mittels derartiger Stromschienen 30 viele Batteriezellen 10 elektrisch in Reihe geschaltet werden können, ohne dass an Batterieanschlüssen 32, 34 der auf diese Weise geschaffenen Batterie 26 (vergleiche Fig. 3) eine Spannung anliegt, welcher der Summe der Spannungen der einzelnen Batteriezellen 10 entspricht. Es kann also weitestgehend gefahrlos die Batterie 26 aufgebaut werden, welche bevorzugt als Hochvoltbatterie, also als Batterie mit einer Nennspannung von mehr als 60 Volt ausgebildet ist.

Die Schaltelemente 24 können insbesondere als Halbleiterelemente ausgebildet sein, und die Steuereinheit 28 kann durch Anlegen einer Steuerspannung dafür sorgen, dass die Schaltelemente 24 geschlossen werden. So lassen sich die Batteriezellen 10 gezielt erst dann aktivieren, wenn ihre Anschlüsse 20, 22 bereits mittels der Stromschienen 30 oder dergleichen Verbindungselemente verbunden sind. Durch das Schließen der Schaltelemente 24 erfolgt dann die Aktivierung der Batterie 26 beziehungsweise ein Scharfschalten des gesamten Systems.

Die Steuereinheit 28 ist jedoch auch dazu ausgelegt, die Schaltelemente 24 in einen Schaltzustand zu überführen, in welchem die elektrisch leitende Verbindung zwischen dem Ableiter 16 und dem Anschluss 20 unterbrochen ist. So lassen sich die Batteriezellen 10 deaktivieren und die gesamte Batterie 26 gefahrlos schalten. Dies kann beispielsweise dadurch geschehen, dass die Steuereinheit 28 dafür sorgt, dass an dem als Halbleiterelement ausgebildeten Schaltelement 24 eben keine Steuerspannung mehr anliegt.

Um der Steuereinheit 28 einen entsprechenden Befehl zum Schalten der Schaltelemente 24 zu übermitteln, kann die Steuereinheit 28 mit einer beispielsweise drahtlosen Kommunikationseinrichtung 36 ausgestattet sein. Über diese Kommunikationseinrichtung 36 kann also die Steuereinheit 28 angewiesen werden, das Schaltelement 24 zu schließen. Dies erfolgt bevorzugt dann, wenn alle Batteriezellen 10 der Batterie 26 elektrisch leitend miteinander verbunden sind.

Über die Kommunikationseinrichtung 36 kann die Steuereinheit 28 aber auch dazu veranlasst werden, das jeweilige Schaltelement 24 zu öffnen. Dies kann beispielsweise im Rahmen einer Wartung der Batterie 26 vorteilhaft sein. Dann liegt nämlich bei Wartungsarbeiten an den Batterieanschlüssen 32, 34 etwa in Form eines negativen Hochvoltanschlusses und eines positiven Hochvoltanschlusses keine gefährliche Spannung mehr an.

Das Abschalten der Batterie 26, insbesondere durch Öffnen aller Schaltelemente 24, ist des Weiteren von Vorteil, wenn die Batterie 26 im Kraftfahrzeug verwendet wird und das Kraftfahrzeug in einen Unfall verwickelt wird. Dann kann nämlich dafür gesorgt werden, dass beispielsweise Rettungskräfte nicht der hohen Spannung der Batterie 26 ausgesetzt sind. Durch das Vorsehen der etwa von einer übergeordneten Steuerungseinrichtung ansprechbaren Steuereinheit 28 besteht also jederzeit die Möglichkeit gleichzeitig alle Batteriezellen 10 zu deaktivieren und somit die Batterie 26 in einen gefahrlosen Zustand zu überführen.

## Patentansprüche

1. Verfahren zum Fertigen einer Batterie (26), insbesondere für ein Kraftfahrzeug, bei welchem elektrische Anschlüsse (20, 22) einer Mehrzahl von Batteriezellen (10), welche jeweils ein einziges in einem Batteriezellengehäuse (12) der jeweiligen Batteriezelle (10) aufgenommenes galvanisches Element (14) aufweisen, mittels zumindest eines elektrisch leitfähigen Verbindungselements (30) derart verbunden werden, dass von der Batterie eine Nennspannung bereitgestellt wird, welche größer ist als die Nennspannung einer der Batteriezellen (10), **dadurch gekennzeichnet, dass**
nach dem Verbinden der elektrischen Anschlüsse (20, 22) von wenigstens zwei Batteriezellen (10) wenigstens ein Schaltelement (24) einer der Batteriezellen (10), welches innerhalb des Batteriezellengehäuses (12) zwischen einem Ableiter (16) des galvanischen Elements (14) und zumindest einem der elektrischen Anschlüsse (20, 22) der Batteriezelle (10) angeordnet ist, in einen Schaltzustand überführt wird, in welchem eine elektrisch leitende Verbindung zwischen dem Ableiter (16) und dem zumindest einen elektrischen Anschluss (20, 22) der Batteriezelle (10) hergestellt ist, wobei der Ableiter (16) des galvanischen Elements (14) zu einem der elektrischen Anschlüsse (20) der Batteriezelle (10) führt, wobei eine ebenso wie das Schaltelement (24) innerhalb des Batteriezellengehäuses (12) angeordnete Steuereinheit (28) der das wenigstens eine Schaltelement (24) aufweisenden Batteriezelle (10) das Schaltelement (24) ansteuert, um das Schaltelement (24) in den Schaltzustand zu überführen, in welchem die elektrisch leitende Verbindung hergestellt ist, wobei der Steuereinheit (28) von einer übergeordneten Steuerungseinrichtung der Batterie (26) ein Befehl übermittelt wird, das Schaltelement (24) anzusteuern, und wobei mittels der Steuereinheit (28) Kriterien vorgegeben werden, bei deren Erfülltsein das wenigstens eine Schaltelement (24) so geschaltet wird, dass die elektrisch leitende Verbindung hergestellt ist.

2. Verfahren nach Anspruch 1,
**dadurch gekennzeichnet, dass**
die wenigstens zwei Batteriezellen (10) durch das Schließen des wenigstens einen Schaltelements (24) in Reihe geschaltet werden.

3. Verfahren nach Anspruch 1 oder 2,
**dadurch gekennzeichnet, dass**
die Steuereinheit (28) es der übergeordneten Steuerungseinrichtung mitteilt, wenn das Schaltelement (24) in den Schaltzustand überführt ist, in welchem die elektrisch leitende Verbindung hergestellt ist und/oder welche Spannung die Batteriezelle (10) bereitstellt.

4. Verfahren nach einem der Ansprüche 1 bis 3,
**dadurch gekennzeichnet, dass**
eine Mehrzahl von Batteriezellen (10) zu einem Batteriemodul zusammengefasst werden, wobei Modulanschlüsse wenigstens zweier Batteriemodule mittels eines elektrisch leitfähigen Modulverbinders verbunden werden, und wobei anschließend wenigstens ein Schaltelement (24) einer der Batteriezellen (10) des jeweiligen Batteriemoduls in den Schaltzustand überführt wird, in welchem die elektrisch leitende Verbindung hergestellt ist.

5. Verfahren nach einem der Ansprüche 1 bis 4,
**dadurch gekennzeichnet, dass**
in der Batterie (26) das Schaltelement (24) zumindest der Batteriezelle (10) geschlossen wird, durch welche jeweilige Batteriezellverbünde von jeweils in Reihe geschalteten Batteriezellen (10) elektrisch leitend miteinander verbunden werden.

6. Verfahren nach einem der Ansprüche 1 bis 5,
**dadurch gekennzeichnet, dass**
alle Batteriezellen (10) der Batterie (26) das Schaltelement (24) aufweisen und nach dem Verbinden der elektrischen Anschlüsse aller Batteriezellen die Schaltelemente (24) aller Batteriezellen (10) gleichzeitig geschlossen werden.

## Claims

1. Method for manufacturing a battery (26), in particular for a motor vehicle, in the case of which electrical connections (20, 22) of a plurality of battery cells (10), which have respectively one single galvanic element (14) accommodated in a battery cell housing (12) of the respective battery cell (10), are connected by means of at least one electrically conductive connecting element (30) such that a nominal voltage is provided by the battery which is greater than the nominal voltage of one of the battery cells (10),
**characterised in that**
after the connecting of the electrical connections (20, 22) of at least two battery cells (10) at least one switching element (24) of one of the battery cells (10), which is disposed within the battery cell housing (12) between an arrester (16) of the galvanic element (14) and at least one of the electrical connections (20, 22) of the battery cell (10), is converted into a switching state, in which an electrically conducting connection is established between the arrester (16) and the at least one electrical connection (20, 22) of the battery cell (10), wherein the arrester (16) of the galvanic element (14) leads to one of the electrical connections (20) of the battery cell (10), wherein a control unit (28), disposed in the same way as the switching element (24) within the battery cell housing (12), of the battery cell (10) having the at least one switching element (24) actuates the switching element (24) in order to convert the switching element (24) into the switching state in which the electrically conducting connection is established, wherein a command is transmitted from a superordinate control device of the battery (26) to the control unit (28) to actuate the switching element (24), and wherein by means of the control unit (28) criteria are predetermined, at the fulfilling of which the at least one switching element (24) is switched such that the electrically conducting connection is established.

2. Method according to claim 1,
**characterised in that**
the at least two battery cells (10) are connected in series by the closing of the at least one switching element (24).

3. Method according to claim 1 or 2,
**characterised in that**
the control unit (28) informs the superordinate control device when the switching element (24) is converted into the switching state in which the electrically conducting connection is established and/or which voltage the battery cell (10) provides.

4. Method according to any of claims 1 to 3,
**characterised in that**
a plurality of battery cells (10) are combined to form a battery module, wherein module connections of at least two battery modules are connected by means of an electrically conductive module connector, and wherein subsequently at least one switching element (24) of one of the battery cells (10) of the respective battery module is converted into the switching state in which the electrically connecting connection is established.

5. Method according to any of claims 1 to 4,
**characterised in that**
in the battery (26) the switching element (24) of at least that battery cell (10) is closed by means of which respective battery cell assemblies of battery cells (10) respectively connected in series are connected in electrically conducting manner with one another.

6. Method according to any of claims 1 to 5,
**characterised in that**
all battery cells (10) of the battery (26) have the switching element (24) and after the connecting of the electrical connections of all battery cells the switching elements (24) of all battery cells (10) are simultaneously closed.

## Revendications

1. Procédé de fabrication d'une batterie (26), en particulier pour un véhicule automobile, dans lequel des bornes électriques (20, 22) d'une pluralité d'éléments de batterie (10), lesquels présentent respectivement un seul élément galvanique (14) reçu dans un boîtier d'élément de batterie (12) de l'élément de batterie (10) respectif, sont reliées au moyen d'au moins un élément de liaison électriquement conducteur (30) de sorte qu'une tension nominale est mise à disposition par la batterie, laquelle est supérieure à la tension nominale d'un des éléments de batterie (10),
**caractérisé en ce que**
après la liaison des bornes électriques (20, 22) d'au moins deux éléments de batterie (10), au moins un élément de commutation (24) d'un des éléments de batterie (10), lequel est agencé à l'intérieur du boîtier d'élément de batterie (12) entre un un limiteur de tension (16) de l'élément galvanique (14) et au moins une des bornes électriques (20, 22) de l'élément de batterie (10), est amené dans un état de commutation, dans lequel une liaison électriquement conductrice entre le limiteur de tension (16) et l'au moins une borne électrique (20, 22) de l'élément de batterie (10) est établie, dans lequel le limiteur de tension (16) de l'élément galvanique (14) conduit à une des bornes électriques (20) de l'élément de batterie (10), dans lequel une unité de commande (28) agencée tout comme l'élément de commutation (24) à l'intérieur du boîtier d'élément de batterie (12) de l'élément de batterie (10) présentant l'au moins un élément de commutation (24) commande l'élément de commutation (24) pour faire passer l'élément de commutation (24) à l'état de commutation, dans lequel la liaison électriquement conductrice est établie, dans lequel un ordre est transmis à l'unité de commande (28) d'un dispositif de commande supérieur de la batterie (26) pour commander l'élément de commutation (24), et dans lequel des critères sont prédéfinis au moyen de l'unité de commande (28), quand ils sont remplis l'au moins un élément de commutation (24) est commuté de sorte que la liaison électriquement conductrice est établie.

2. Procédé selon la revendication 1,
**caractérisé en ce que**
les au moins deux éléments de batterie (10) sont commutés en série par la fermeture de l'au moins un élément de commutation (24).

3. Procédé selon la revendication 1 ou 2,
**caractérisé en ce que**
l'unité de commande (28) indique au dispositif de commande supérieur à quel moment l'élément de commutation (24) est passé à l'état de commutation, dans lequel la liaison électriquement conductrice est établie et/ou quelle tension l'élément de batterie (10) met à disposition.

4. Procédé selon l'une quelconque des revendications 1 à 3,
**caractérisé en ce que**
une pluralité d'éléments de batterie (10) sont regroupés en un module de batterie, dans lequel les bornes de module d'au moins deux modules de batterie sont reliées au moyen d'un connecteur de module électriquement conducteur, et dans lequel ensuite au moins un élément de commutation (24) d'un des éléments de batterie (10) du module de batterie respectif passe à l'état de commutation, dans lequel la liaison électriquement conductrice est établie.

5. Procédé selon l'une quelconque des revendications 1 à 4,
**caractérisé en ce que**
l'élément de commutation (24) au moins de l'élément de batterie (10) est fermé dans la batterie (26), par lequel des regroupements d'éléments de batterie respectifs d'éléments de batterie (10) commutés respectivement en série sont reliés les uns aux autres de manière électriquement conductrice.

6. Procédé selon l'une quelconque des revendications 1 à 5,
**caractérisé en ce que**
tous les éléments de batterie (10) de la batterie (26) présentent l'élément de commutation (24) et après la liaison des bornes électriques de tous les éléments de batterie, les éléments de commutation (24) de tous les éléments de batterie (10) sont fermés en même temps.
